(19) Europäisches Patentamt
European Patent Office
Office européen des brevets

(11) Publication number: 0 049 064
B1

(12) **EUROPEAN PATENT SPECIFICATION**

(45) Date of publication of patent specification: **03.04.85**

(51) Int. Cl.$^4$: **C 22 B 34/22**

(21) Application number: **81304110.0**

(22) Date of filing: **08.09.81**

# (54) Recovery of vanadium.

(30) Priority: **27.09.80 GB 8031308**

(43) Date of publication of application:
**07.04.82 Bulletin 82/14**

(45) Publication of the grant of the patent:
**03.04.85 Bulletin 85/14**

(84) Designated Contracting States:
**AT BE DE FR GB IT NL SE**

(56) References cited:
**DE-A-2 821 309**
**US-A-1 020 312**
**US-A-3 252 756**
**US-A-3 305 322**
**US-A-3 615 167**
**US-A-3 836 476**
**US-A-4 212 849**
**US-A-4 225 396**

(73) Proprietor: **Interox Chemicals Limited**
**Hanover House 14 Hanover Square**
**London W1R 0BE (GB)**

(72) Inventor: **Loveitt, Mark Elson**
**8 Avenue Court Farm Avenue**
**London. NW2 2PT (GB)**
Inventor: **Mobbs, David Barry**
**9 Coniston Drive**
**Handforth Cheshire, SK9 3NN (GB)**
Inventor: **Walton, Michael Edward**
**9 Beechwood Avenue Romiley**
**Stockport Cheshire SK6 4DL (GB)**

(74) Representative: **Pearce, Timothy et al**
**Laporte Industries Limited Group Patent**
**Department P.O. Box 2 Moorfield Road**
**Widnes Cheshire WA8 OJU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 049 064 B1

**Description**

The present invention relates to improvements in the recovery of vanadium from an aqueous acidic solution thereof and in particular to the oxidation of the vanadium in such a process.

The known mineral reserves of vanadium in the world are comparatively small, one of the main mineral sources being uranium/vanadium ores such as carnotite which has the imperical formula

$$K_20.2UO_3.V_20_5.3H_20,$$

which are of importance not only for their vanadium content but also for their uranium. The mineral is generally ground and contacted with a sulphuric acid lixiviant, although other mineral acids could be employed if desired, during which period of contact the uranium and vanadium are leached into solution. In general, the solution contains uranium in the U (VI) oxidation state and the vanadium in the vanadium (IV) oxidation state. In the currently employed process for recovering metals from the pregnant solution the mixed metal solution is contacted with an amine dissolved in a water-immiscible solvent such as kerosene or similar mixtures of hydrocarbons or with selected ion exchange resins, and the uranium is prefentially extracted, leaving the vanadium in solution. Further sources of vanadium include residues and wastes and scrap alloys from which vanadium can be brought into solution by acid leaching. It has been recognised that a convenient method of subsequently removing the vanadium would comprise its oxidation to the V (V) oxidation state followed by extraction from an acidic solution using an amine solvent extraction or cation exchange resins, or by precipitation.

Various methods for the oxidation of vanadium in aqueous solution have been described, and a few have even been put into commercial practice. In general, in acidic conditions, it is necessary to employ a reagent that is a strong oxidising agent. Thus, for example, P. H. Tedesco et al in the Anales Asoc. Quim. Argentina 65, pages 45—51 in a paper entitled "Recovery of vanadium from a uranium ore by liquid-liquid extractions with amines" advocate the use of potassium chlorate. However, we have found that the use of chlorate suffers from the inevitable disadvantage that after several recycles of the lixiviant there is a build-up of chloride in solution with its concommitant corrosion and waste discharge problems, but of even more significance is the fact that, in practice, the reaction cannot be controlled easily. At temperatures within about 10—15°C of the subsisting temperature of the stripped aqueous phase leaving the uranium extraction stage, the rate of oxidation of vanadium is rather slow, a holding time of up to 6 hours being required when only a small excess of chlorate is employed. Moreover, if control of the dosage of oxidant is made on the basis of measurement of the electrochemical potential of the aqueous solution, there is a considerable likelihood of over-dosing, thereby not only wasting the reagent, but also leaving in solution a residual amount of oxidant that can be taken up by the amine and degrade the amine solvent extractants in the subsequent vanadium extraction stage, as has been recognised in "Solvent Extraction, Principles and Application to Process Metallurgy (Part II)" on page 597, by G. M. Ritcey and A. W. Ashbrook, published by Elsevier in 1979.

A further reagent that has been tested in the USA is hydrogen peroxide. We have found that it can be capable of oxidising vanadium (IV) to V(V) in aqueous solutions having acidities suitable for the subsequent solvent or ion exchange extraction of vanadium therefrom, despite various disclosures in, for example, a paper by G. Kakabadse and H. T. Wilson entitled "The reduction of hydrogen peroxide" that hydrogen peroxide is decomposed by vanadium (V) and the latter is to at least some extent, reduced to V (IV), visibly proceeding via a peroxovanadium intermediate. Broadly, we have found in one series of tests on synthetic solutions that it was possible in many instances to oxidise about two thirds of the V (IV) using hydrogen peroxide, but it required at ambient temperature, about a ten fold excess of hydrogen peroxide over the stoichiometric amount, and a holding time of about a day or longer, and that at hydrogen peroxide usages of about twice the stoichiometric amount at ambient temperature and a final pH of about 3, conversion to V (V) of only about 20—25% occured after about an hour by which time no free hydrogen peroxide remained in solution. In other series of tests, conversions to V (V) of about 60% were achieved at pH 2 and hydrogen peroxide usages in the region of 1.1 to 2.2 times the stoichiometric amount after an hour, but similar tests in which adjustment to the desired pH was the last step yielded much worse results, so that the process appeared to be very pH sensitive and to need a long holding time of an hour at least. This confirms that the inter-relationship between the many various vanadium-containing species that can be present in aqueous acidic solutions into which hydrogen peroxide has been introduced is very complex and not readily susceptible to accurate forecasting. The situation is further complicated when the oxidation is effected in the presence of a substantial amount of iron, as can be the case when the vanadium solution has been obtained from ores or from ferro-vanadium alloys. Although iron is also a recognised decomposition agent for hydrogen peroxide, its presence alters to some extent the problems of oxidising vanadium outlined hereinbefore, but a considerable excess amount of hydrogen peroxide is still needed. Furthermore, addition of more than the optimum amount of hydrogen peroxide can result in the reduction of the electropotential of the aqueous solution, i.e. the hydrogen peroxide reassuming a role of reductant, which naturally can lead to operating difficulties. Moreover, when using hydrogen peroxide, we have observed a tendency for an insoluble vanadium and iron-containing precipitate to form sometimes. Formation of the

precipitate is to be avoided in that it can lead to emulsification problems in any subsequent solvent extraction stage, and it also inevitably reduces the selective recovery of vanadium, but adjustment of the conditions to prevent the precipitation leads to impaired efficiency in the subsequent vanadium recovery. It will be seen therefore, that the aforementioned processes suffering one or more disadvantages so that an improvement in the provision of a rapid and convenient method for oxidising vanadium to V (V) that has generally applicability is still needed.

It is an object of the present invention to provide a process for the oxidation of vanadium, and especially vanadium (IV), to V (V) at aqueous acidic conditions which avoids the introduction of more corrosive materials and which permits a substantially complete oxidation of the vanadium. In at least some embodiments there is provided a process for the oxidation of vanadium to V (V) which substantially minimises or eliminates hold-up times for the reaction, thereby permitting the process to be incorporated in a continuous process for extracting vanadium from an aqueous acidic solution thereof, and particularly, from solutions obtained by acid leaching of carnotite ore or similar ores.

According to the present invention there is provided a process for the oxidation of vanadium to oxidation state V in which oxidant is introduced into an aqueous acidic solution of vanadium in an oxidation state lower than V at a temperature of from 0 to 80°C and oxidant is maintained in solution until at least some of the vanadium has been oxidised to the oxidation state V, characterised by employing as oxidant an aqueous acidic solution of peroxomonosulphuric acid containing hydrogen peroxide in an amount of less than one mole of hydrogen peroxide per mole of peroxomonosulphuric acid. By the use of such an oxidant, we have found that under convenient operating conditions, the hold-up time is at most a few minutes and can be substantially nil under various preferred conditions specified hereinafter.

In general, the various methods of producing peroxomonosulphuric acid on a commercial scale and, in particular, acid hydrolysis of peroxodisulphuric acid or a peroxodisulphate and reaction between hydrogen peroxide and sulphuric acid produce solutions containing inevitably a certain proportion of hydrogen peroxide. These solutions are often called Caro's Acid solutions. Notwithstanding the fact that hydrogen peroxide, by itself, can be used to oxidise a major proportion of the vanadium to the V (V) oxidation state, its presence in the Caro's Acid solution tends to interfere with the reaction between the vanadium and the peroxomonosulphuric acid. This interference or antagonism manifests itself as an induction period during which period introduction of further amounts of a similar Caro's Acid solution serves merely to prolong the time taken for complete oxidation of the vanadium to occur, and to waste the Caro's Acid. It will be seen therefore, that under some conditions, the hydrogen peroxide is interfering with the peroxomonosulphuric acid oxidation in some way that is not fully understood at the moment. We have found that the induction period varies with the mole ratio of peroxomonosulphuric acid to hydrogen peroxide. By control of manufacture of the solution so as to generate high mole ratio's such as above 6:1 and conveniently from 8:1 to 20:1, $H_2SO_5$:$H_20_2$, the induction period can be substantially eliminated. Depending on the apparatus in which the process is carried out, an induction period of as long as a few minutes can be tolerated so that in such circumstances, mole ratios of $H_2SO_5$: hydrogen peroxide of from 1:1 to 6:1 can also be of practical value, albeit slightly less conveniently than above 6:1.

The process can comprise first measuring the vanadium and other metal contents in a sample of the solution, and based upon that, introducing a predetermined amount of oxidant, normally at least 75% and generally in the range of 100% to 250% the stoichiometric amount of Caro's Acid (ignoring the $H_20_2$ content) and especially from 100% to 120% of the stoichiometric amount where the mole ratio $H_2SO_5$:$H_20_2$ is 8:1 or higher.

One especially advantageous feature of a process according to at least some embodiments of the present invention is that the introduction of oxidant can be controlled easily and conveniently by, and on the basis of, monitoring the electrochemical potential ($E_h$) of the vanadium-containing solution. In the case of batch reactions the $E_h$ detector is located in the treatment vessel containing the solution into which oxidant is to be introduced and in practice due allowance is made for the aforementioned induction period when the Caro's Acid used is such that a measurable induction period exists, such as by introducing the Caro's Acid solution periodically by increments after a steady $E_h$ has been attained following production of the preceding increment. Although the vanadium-containing solution can be treated continuously, employing a control method based on $E_h$ detection even when there is an induction period, by for example, siting the $E_h$ monitor downstream of the point of introduction of the Caro's Acid so as to ensure a flow time between the introduction point and the monitor that is longer than any induction period, possibly employing more than one state each comprising a point of introduction of Caro's Acid and subsequent monitoring, it is much more convenient and accurate and a much quicker response to any change in vanadium (IV) concentration can be achieved in a continuous process by employing a Caro's Acid solution so made that there is substantially no induction period.

We have found that it is preferable to oxidise the solution to a potential reading of over 700 mV and that 825 to 875 mV as measured by platinum, silver/silver chloride electrodes at a pH of about 1 to 2 indicates not only that all or substantially all the vanadium has been oxidised to V (V) but also that not more than an insubstantial amount of peroxoacid remains in solution. Corresponding ranges exist for other electrodes used, such as the standard platinum/calomel electrodes. It will be recognised that the response to the monitored $E_h$ reading can be manually controlled, for example, in a batch process by the process operator reducing the rate of inflow of Caro's Acid when a predetermined potential has been reached, such 75 to 100

mV below the potential indicating complete vanadium oxidation to V (V) measured by the aforementioned electrodes, and stopping the inflow when the $E_h$ reading indicating complete oxidation to V (V), e.g. 825 to 875 mV (i.e. the cut-off potential) is reached, and subsequently, checking the potential, such as after a few minutes to see whether the reading had fallen and if it had introducing further Caro's Acid solution to re-obtain the desired potential. One method of determining an end point for the Caro's Acid introduction is to plot a) the figure obtained by dividing the measured incremental change in $E_h$ of the vanadium solution (E) by the incremental volume of oxidant solution introduced (V) which caused that change in $E_h$ against b) the total volume of oxidant solution introduced into a given sample of the vanadium solution. A sharp peak generally in the region of about 800 to 900 mV measured with a Pt-Ag/AgCl electrode system indicates the end point for vanadium oxidation to V(V). A similar procedure can be adopted when the process is continuous by employing a plurality of points of inflow of Caro's Acid and $E_h$ monitoring stations located alternately along the flow path, and so spaced to take into account any induction period.

Advantageously, however, the monitored $E_h$ reading can be employed so as to control automatically the inflow of Caro's Acid. In either a batch or a continuous process, of course, automatic control is much simpler when there is no induction period, for example when the mole ratio of $H_2SO_5$:$H_20_2$ is at least 8:1, in that the signal from the $E_h$ monitor can be used to control the valve or the metering pump or other means regulating the flow of Caro's Acid to the treatment vessel or pipe or alternatively, control the flow of both reagents to the Caro's Acid generator when the Caro's Acid solution is generated in the amount required and instantaneously, on demand. By so selecting the Caro's Acid solution that there is no induction period, when using it, only a single $E_h$ monitor is needed in a continuous process.

In view of the advantages of supplying a Caro's Acid solution having a high mole ratio of peroxomonosulphuric acid to hydrogen peroxide, it is highly desirable to produce the Caro's Acid solution by reaction between concentrated sulphuric acid or oleum and concentrated hydrogen peroxide, since such a reaction can be readily controlled to generate the Caro's Acid solution having the preferred characteristics by control in combination of the mole ratio of sulphuric acid to hydrogen peroxide and selection of the appropriate concentrations of starting materials. By virtue of the speed of the reaction, the Caro's Acid can be produced rapidly by pumping the starting materials into a cooled reaction vessel with a storage capacity equivalent to about half an hour to an hour's product requirement, thereby avoiding the disadvantageous and well-known gradual decomposition of peroxomonosulphuric acid to hydrogen peroxide and sulphuric acid which occurs upon storage for prolonged periods. It is particularly convenient to employ aqueous hydrogen peroxide solutions of 60—75% and especially 65—70% by weight, by virtue of their ready availability, but higher concentrations such as up to 85% by weight are equally suitable. The hydrogen peroxide solutions are often used in conjunction with at least 90 and frequently 92 to 98% by weight sulphuric acid solutions. The reagents are preferably employed in a mole ratio of sulphuric acid to hydrogen peroxide selected within the range of at least 2.5:1 to 4:1 to give an $H_2SO_5$:$H_20_2$ mole ratio in the product of at least 6:1. When such reagents are so selected in such a mole ratio the resultant Caro's Acid solution oxidises vanadium with substantially no induction period, and is thus ideally suited for use in a continuous process for vanadium oxidation. As the ratio of $H_2SO_4$:$H_20_2$ introduced changes in the range 4:1 to 2.5:1, then the extent of choice within the specified ranges of 92—98 % and 60—75 % changes also, to attain an $H_2SO_5$:$H_20_2$ ratio of at least 6:1. Thus at 4:1 all combinations can be used whereas by 2.5:1, the $H_2SO_4$ is preferably 95 % at least and/or the hydrogen peroxide is preferably at least 70 %. Where a subsequent neutralisation of the oxidised solution is required, a combination selected in the range of mole ratio of 2.5:1 to 3:1, 70—75 % hydrogen peroxide and 97/98 % sulphuric acid is advantageous, whereas with 93/94 % sulphuric acid and 70—75 % hydrogen peroxide a very attractive range of mole ratios is 3:1 to 3.5:1.

It will be recognised that solvent extraction of uranium and/or vanadium from aqueous acidic solutions thereof is usually effected at a temperature of about 50°C or lower, and often within 10°C of the subsisting solution temperature or ambient in order to minimise solvent losses and degradation. Most conveniently, we have found that Caro's Acid is a rapid and effective oxidant at all temperatures at which solvent extraction is currently contemplated, i.e. generally from 10°C upwards, so that, for example, uranium barren liquor from a solvent extraction stage, in the treatment of carnotite ore can normally be treated with Caro's Acid without any temperature adjustment. Consequently, not only does the present invention provide a rapid and controllable reaction which can employ minimal oxidant, but it also avoids the use of ever more costly heating. A higher temperature, e.g. up to 80°C may be used though, if desired.

In general, the vanadium-containing solution is adjusted to a pH in the range of from pH 1 to 3, prior to and/or during oxidation, such a pH range representing the pH at which a subsequent solvent extraction using amines can readily be effected. The suitability of Caro's Acid in the preceding stage was demonstrated by contacting the amine solution with a vanadium solution oxidised with Caro's Acid to 850 mV for 20 days at 50°C at the end of which there was no detectable amine degradation.

The amines that can be used to extract the vanadium subsequently include those which have hitherto been used or described for the extraction of metals in a high oxidation state from aqueous solution. Such amines are normally tertiary amines with a molecular weight in excess of 180 and often in the range of 300 to 450, especially tricaprylamine or mixtures containing it (commercially available under the mark ALAMINE®336 from General Mills Inc., USA) trioctylamine and trinonylamine. Such amines can be used with various diluents and modifiers as will be apparent to the skilled artisan. In practice, where the

vanadium solution has been obtained by leaching an ore, it often will contain a substantial concentration of iron and in such circumstances the pH of the vanadium solution is preferably maintained at pH2 or below, such as from pH1 to pH2 during and after oxidation so as to avoid iron precipitation. Where needed, downward adjustment of the pH to pH2 or lower can be achieved by addition of a mineral acid, especially sulphuric acid, before or during oxidation, but generally when Caro's Acid is employed added acid during oxidation is not required, in many cases the oxidised solution having a pH in the range pH1 to pH1.5.

The process of the present invention is well suited to the treatment of any oxidisable vanadium-containing solution, particularly dilute solutions, many of such solutions containing from 0.1 to 10 gpl vanadium, although concentrations outside the range can be treated. The solution can also contain other metallic impurities such as iron, uranium and molybdenum, but where such impurities are present in an appreciable amount in an oxidation state that is oxidisable by Caro's Acid, then allowance must be made for that in determining the amount of Caro's Acid to introduce, and any reference to stoichiometric amount naturally is calculated on the basis of all the oxidisable metals, including vanadium. It will be recognised though, that allowance for example, for the oxidation of ferrous to ferric ion occurs automatically when the Caro's Acid is introduced in response to the electropotential of the solution, and the selected Caro's Acid has a ratio of $H_2SO_5$ to $H_2O_2$ high enough for the Caro's Acid to oxidise vanadium with substantially no induction period.

The aforementioned tertiary amines tend to extract vanadium more efficiently from aqueous solutions having a higher rather than a lower pH in the aforementioned range and thus it can be advantageous to adjust the solution during or after oxidation, to a pH or from pH 1.5 to 2.0, preferably 1.8 to 2.0. When a vanadium solution (2.5 g/l as $V_2O_5$) containing iron, (10 g/l, 53% ferrous) was oxidised with hydrogen peroxide or Caro's Acid containing $H_2SO_5$ and $H_2O_2$ in a mole ratio of about 8:1 the Caro's Acid oxidised smoothly at pH 1.9 whereas it was necessary to lower the pH to 1.75 when hydrogen peroxide was used, otherwise a precipitate occurred. At the lower pH, subsequent vanadium extraction by the amine was markedly (about 20%) less efficient.

In broad outline, the process in some preferred embodiments comprises the batch or continuous treatment of a vanadium-containing solution which has been obtained by leaching carnotite ore with aqueous sulphuric acid and from which uranium has been stripped, by monitoring the electropotential of the solution and based upon the monitoring automatically or manually causing the introduction therein of Caro's Acid solution, containing $H_2SO_5$:$H_2O_2$ in a mole ratio of at least 8:1 to cease when the oxidation potential for V (IV)/V (V) has been reached and thereafter extracting the oxidised solution with a tertiary amine solvent extractant until at least some of the vanadium has been extracted. Preferably, oxidation is effected in a continuous manner, the introduction of Caro's Acid is controlled automatically and subsequent amine extraction is also continuous.

Having described the invention in general terms, specific embodiments will now be described by way of example only.

Examples 1—15

Stock aqueous vanadium (IV)-containing solutions employed in Examples 1—15 were prepared by dissolving vanadyl sulphate in aqueous sulphuric acid and adjusting the pH of the solution to that specified in Table 1 by addition as appropriate of further sulphuric acid. In each example a 25 ml aliquot of solution was introduced into a beaker equipped with stirrer and a platinum spade electrode and silver/silver chloride reference electrode. The vanadium contents of the stock solutions were determined by atomic adsorption spectroscopy.

Caro's Acid solutions were prepared having the composition specified in Table 1 by reaction between aqueous hydrogen peroxide and concentrated sulphuric acid, (98% by weight) followed by dilution with demineralised water to a concentration of about 1% by weight of $H_2SO_5$. The $H_2SO_5$ and $H_2O_2$ contents of the diluted solutions were measured and the resultant ratio is specified in Table 1. The analysis for $H_2SO_5$ was carried out by reaction with arsenious oxide and back titration with ceric sulphate and analysis for $H_2O_2$ by titration with ceric sulphate.

The volume of Caro's Acid solution required to oxidise all the vanadium in solution from the (IV) to the (V) oxidation state was calculated, i.e. 100% of the stoichiometric amount, on the basis solely of $H_2SO_5$ in solution, making no allowance for the $H_2O_2$, and that volume was introduced into the vanadyl sulphate solution. The electropotential ($E_h$) of the solution was plotted continuously using a chart recorder and the graphs obtained in Examples 2, 5, 8, 10 and 14 of $E_h$ against time form Figure 1 hereof. The proportion of vanadium present in the final solution as vanadium (V) was determined by analytical method in which hydrogen peroxide was first shown to be absent by using starch/iodide paper and then vanadium (V) was reduced with known and excess amount of iron (II), and the latter is back titrated with ceric sulphate.

In Table 1, concentrations of $H_2SO_5$ and $H_2O_2$ are expressed as weight %, and have been rounded, whereas the quoted mole ratio of $H_2SO_5$:$H_2O_2$ was calculated using the non-rounded figures.

TABLE 1

| Example No. | Mole ratio $H_2SO_4$: $H_2O_2$ | Conc of $H_2O_2$ used | Reagents: Caro's Acid solution Conc $H_2SO$ | Conc $H_2O_2$ | Mole ratio $H_2SO_5$: $H_2O_2$ |
|---|---|---|---|---|---|
| 1/2/3 | 5:1 | 70 | 1.05 | 0.02 | 15.7:1 |
| 4/5/6 | 3:1 | " | 1.01 | 0.04 | 8.1:1 |
| 7/8/9 | 2:1 | " | 1.24 | 0.10 | 3.7:1 |
| 10/11/12 | 3:2 | " | 1.03 | 0.15 | 2.1:1 |
| 13/14/15 | 2:1 | 50 | 1.07 | 0.26 | 1.2:1 |

TABLE 1 continued

| | pH of Vanadium solution | Final $E_h$ (m V) | Peak $E_h$(m V) | %V (V) |
|---|---|---|---|---|
| 1 | 2.0 | 1090 | No | 98 |
| 2 | 1.5 | 1150 | Peak | 98 |
| 3 | 1.0 | 1200 | Observed | 98 |
| 4 | 2.0 | 1000 | No | 98 |
| 5 | 1.5 | 1010 | Peak | 97 |
| 6 | 1.0 | 1230 | Observed | 97 |
| 7 | 2.0 | 710 | 880 | 54 |
| 8 | 1.5 | 740 | 1010 | 53 |
| 9 | 1.0 | 860 | 1065 | 60 |
| 10 | 2.0 | 680 | 700 | 54 |
| 11 | 1.5 | 720 | 815 | 58 |
| 12 | 1.0 | 815 | 1015 | 45 |
| 13 | 2.0 | 675 | 685 | 31 |
| 14 | 1.5 | 705 | 735 | 34 |
| 15 | 1.0 | 790 | 860 | 26 |

From Table 1 and Figure 1 it can be seen clearly that by supplying Caro's Acid solution having high mole ratio's of $H_2SO_5$ to $H_2O_2$, substantially quantitative oxidation of the vanadium (IV) occurred and that the electropotential ($E_h$) of the solution rose smoothly to a peak above the potential of V (IV) V (V). However, when a somewhat lower mole ratio was used, for example, about 4:1 or lower, two effects were noticeable. First, a distinctive peaking in the plot of potential against time occurred and secondly, the overall proportion of vanadium oxidised was significantly less than 100%. Both observations are consistent with the belief that hydrogen peroxide was interfering with the vanadium oxidation, possibly by interacting with vanadium (V) to form a complex that decomposes to vanadium (IV).

Comparison 1

In this comparison, a solution of vanadyl sulphate in sulphuric acid having a pH of 2.0 and a concentration of 1.16 gpl., expressed as vanadium, was prepared in the manner of examples 1—15, and an aliquot of 20 ml of solution contacted with an aqeous solution of sodium chlorate having a concentration of 0.01 moles per litre. The vanadyl solution was stirred with 20 ml of the sodium chlorate, which represents 2.5 times the stoichiometric amount of oxidant, and the mixture was stored at 22° (ambient laboratory temperature). The potential of the solution was monitored as in Examples 1 to 15, and the results indicated that oxidation proceeded slowly and incompletely, the potential having risen to only 620 after 30 minutes and 680 after 4.5 hours. The maximum potential was reached after twenty four hours, but at 800 was still lower than that required for 100% oxidation to vanadium V. This comparison clearly demonstrates disadvantages in seeking to apply sodium chlorate.

Comparison 2

In comparison 2, a further 20 ml aliquot of vanadyl sulphate solution (1.012 gpl vanadium, pH2) was titrated at ambient temperature with an aqueous solution of peroxydisulphuric acid from which had been removed peroxomonosulphuric acid by introduction therein of a calculated amount of arsenious oxide. The resulting treated solution was then analysed for peroxydisulphuric content by reaction with an N/100 iron (II) solution and back titration against N/100 potassium permanganate. The theoretical amount to oxidise all the vanadium in the 20 ml aliquot to vanadium (V) was 2.5 ml of the peroxydisulphuric acid solution. In practice, 14 ml of solution was added gradually, equivalent to 5.75 times the stoichiometric amount, but the potential of the solution as measured by the apparatus of Examples 1 to 15 was only 600 mV. Three days later, the potential had still reached only 710 mV. This experiment clearly discloses that peroxydisulphuric acid suffers from several major disadvantages for the present purpose, even though it has an extremely high oxidation potential, and also that any effectiveness may have been due to hydrolysis to peroxomonosulphuric acid.

Comparisons 3a—3h

In these comparisons, the effectiveness of hydrogen peroxide to oxidise vanadium (IV) to (V) was tested. In each test, a 50 ml aliquot of a stock Vanadyl sulphate solution was diluted with a calculated amount of hydrogen peroxide and sulphuric acid, and where applicable an aqueous solution of a molybdenum, uranium or iron solution to achieve the pH, and at a temperature indicated in Table II. "Peroxide ratio" in Table II is the ratio of the amount of hydrogen peroxide added to the stoichiometric amount needed to oxidise the vanadyl.

The solution for comparisons 3a to 3d were made by Method A by first adding the hydrogen peroxide to the vanadium IV solution, then diluting it to about 90 ml with DMW including any added impurity and finally adjusting the pH with sulphuric acid, whereas the solutions for comparisons 3e to 3h were made by Method B by first diluting the vanadyl sulphate solution to about 90 ml, together with any impurity, then adjusting to just below the desired pH with sulphuric acid, thirdly, introducing the hydrogen peroxide, and finally, checking the volume and pH and making any necessary minor adjustments.

The solutions were maintained at the given temperature until the colour change to yellow indicated that all the peroxide had reacted. The results are summarised in Table II. The results that were obtained in the presence of 10 mg/l molybdenum, uranium or iron were often the same or very similar to those obtained in impurity free solutions except using method A at pH 1, where the conversion was often higher in solutions containing iron.

TABLE II

| | | % Conversion of vanadium V. | | | |
|---|---|---|---|---|---|
| | Peroxide | 22°C | | 50°C | |
| Test | ratio | pH 1 | pH 2 | pH 1 | pH 2 |
| a | 1.1 | | 11 | | |
| b | 1.5 | 34 | | 43 | |
| c | 2.2 | | 20 | | |
| d | 3.0 | 36 | | 38 | |
| e | 1.1 | | 56 | | 58 |
| f | 1.5 | | | 16 | |
| g | 2.2 | | | | 59 |
| h | 3.0 | | | 24 | |

From Table II, it can be seen that the conversion to vanadium (V) effected by hydrogen peroxide is sensitive to pH, and to the method by which the solutions were formed. Furthermore, it will be observed that in several cases, doubling the peroxide ratio did not lead to a significant improvement in peroxide conversion. However, since these results demonstrate that hydrogen peroxide does oxidise vanadium(IV), it emphasises the surprising antagonism between hydrogen peroxide and peroxymonosulphuric acid.

Example 16

In this example, the vanadyl sulphate solution employed was prepared by the method described for Examples 1 to 15 and has a pH of 2 and an initial concentration of 1.09 gpl vanadium. A 20 ml aliquot of the solution was titrated at ambient temperature against an aqueous Caro's Acid solution which was analysed by the standard methods and contained 1.01% $H_2SO_5$, 0.027% $H_20_2$ prepared using an initial mole ratio of $H_2SO_4$, $H_20_2$ of 3:1 and then diluted. The equipment was the same as in the preceding Examples. The potential ($E_h$) was measured after the introduction of each portion of oxidant and the results plotted in Figure 2. Salient readings are shown in Table III hereinbelow.

TABLE III

| Oxidant added (mls) | 0 | 0.5 | 1.0 | 1.5 | 2.0 | 2.5 | 2.6 |
|---|---|---|---|---|---|---|---|
| Potential of solution (mV) | 465 | 575 | 615 | 650 | 680 | 730 | 755 |

TABLE III (cont.)

| Oxidant added (mls) | 2.7 | 2.8 | 2.9 | 3.0 | 3.5 | 4.0 |
|---|---|---|---|---|---|---|
| Potential of solution (mV) | 780 | 900 | 940 | 960 | 1020 | 1060 |

From Table III and Figure 2, it can be seen that a very well defined end point occurred at a point in the range of 2.7 to 2.8 mls of oxidant added, such that the introduction of oxidant solution could be controlled by monitoring the potential, and that by comparison between the measured end point and the calculated amount the reaction required approximately a stoichiometric amount of $H_2SO_5$.

Repetition of Example 16 with solutions containing as impurity iron, molybdenum or uranium at 10 mg per litre produced substantially identical graphs to that obtained from Example 16, slightly less oxidant, about 6%, being needed in the presence of the iron.

Example 17

In Example 17 the general method of Example 16 was followed but instead of the synthetic solution of vanadyl sulphate; a commercial sulphate solution was employed which on analysis was found to contain 8.8 gpl iron, of which a major proportion was ferrous, 1.1 gpl vanadium and minor amounts of inter alia uranium and molybdenum. The solution had an initial pH of 1.25. A 10 ml aliquot of the solution was diluted to 20 ml with DMW and titrated against a Caro's acid solution containing 1.03% $H_2SO_5$ and 0.03% $H_20_2$. Salient readings of the potential are shown in Table IV below

TABLE IV

| Oxidant added (mls) | 0 | 3.0 | 6.0 | 6.2 | 6.3 | 6.4 | 6.5 |
|---|---|---|---|---|---|---|---|
| Potential of solution (mV) | 425 | 465 | 535 | 550 | 500 | 580 | 620 |

TABLE IV (cont.)

| Oxidant added (mls) | 6.6 | 7.0 | 7.5 | 7.6 | 7.7 | 7.8 |
|---|---|---|---|---|---|---|
| Potential of solution (mV) | 640 | 690 | 740 | 765 | 860 | 1010 |

From Table IV it can be seen that even in the presence of an overwhelming amount of iron, a very clear vanadium IV/vanadium (V) end point occurs at about 7.7 mls oxidant added and that by determining the difference between that and the ferrous/ferric end point at about 6.45 mls, very little more (about 5%) than the stoichiometric amount of $H_2SO_5$ was employed in oxidising the vanadium. In practice, it will be seen that the reaction can again be readily controlled by monitoring the potential, and in response thereto regulating the introduction of the oxidant.

Examples 18 to 20

In each of these Examples, a further 10 ml aliquot of the commercial solution of Example 17 was contacted with Stoichiometric amount in the one of three Caro's Acid solutions determined by the second end point of Example 17, i.e. approx. $7\times10^{-4}$ moles of $H_2SO_5$ and having the mole ratio of $H_2SO_5$ to $H_20_2$

given in Table V. The general method employed, and the potential and conversion of vanadium IV to vanadium V and determined, were all as in Examples 1—15, and the results summarised in Table V.

TABLE V

| Example No | Mole ratio $H_2SO_5:H_2O_2$ | Final potential | Percentage conversion to V (V) |
|---|---|---|---|
| 18 | 16.1 | 1140 | 97 |
| 19 | 8.7:1 | 1170 | 98 |
| 20 | 3.7:1 | 760 | 75 |

Examples 18 and 19 confirm that at least substantially complete conversion of vanadium IV to vanadium V had occurred using the amount determined by the end point in Example 17.

Example 20 by Comparison with Examples 7 to 9 demonstrates that the interference between $H_2O_2$ and $H_2SO_5$ was less apparent in the presence of a substantial amount of ferrous iron initially than in its absence. The reason for such an improvement is not fully understood, but it may be related to the iron.

Example 21 and comparison 22

In this Example and Comparison, the general method of Example 16 was followed using a vanadium solution that had an initial pH of 1.36, an iron content of 7.7 g/l of which 4.08 g/l was ferrous iron, a vanadium content of 6.9 g/l, 40 mg/l molybdenum and trace uranium. In Example 21, a Caro's Acid solution containing $H_2SO_5$ to $H_2O_2$ in a mole ratio of greater than 10:1 was used and in comparison 22, Technical grade hydrogen peroxide 50% w/w from Interox America diluted to 10 % w/w. The oxidant was titrated into the vanadium solution at 25°C. The potentials of the solutions were measured and the plots are shown in Figures 3 and 4 respectively appended hereto.

From Figure 4 it can be seen that with hydrogen peroxide, the potential peaks at about 700 mV whereas from Figure 3 with Caro's Acid of very low hydrogen peroxide content a smoothly increasing curve was obtained. In addition, Figure 3 shows a very clear end point for oxidation of the vanadium, whereas the corresponding end point in Figure 4, the comparison, is barely detectable.

**Claims**

1. A process for the oxidation of vanadium to oxidation state V in which oxidant is introduced into an aqueous acidic solution of vanadium in an oxidation state lower than V at a temperature of from 0 to 80°C and oxidant is maintained in solution until at least some of the vanadium has been oxidised to the oxidation state V, characterised by employing as oxidant an aqueous acidic solution of peroxomonosulphuric acid containing hydrogen peroxide in an amount of less than one mole of hydrogen peroxide per mole of peroxomonosulphuric acid.

2. A process according to claim 1 characterised in that the peroxomonosulphuric acid is employed in an aqueous acidic solution thereof containing hydrogen peroxide in an amount of less than 1 mole per 6 moles of peroxomonosulphuric acid.

3. A process according to claim 1 or 2 characterised in that the solution of peroxomonosulphuric acid is obtained by reaction between aqueous hydrogen peroxide having a concentration selected within the range of 60 to 75% by weight, and sulphuric acid having a concentration of at least 90% by weight in a molar ratio of $H_2SO_4:H_2O_2$ selected in the range of from 2.5:1 to 4:1.

4. A process according to any of claims 1 to 3 characterised in that the vanadium solution is maintained within the range of pH 1 to 3.

5. A process according to claim 4 characterised in that the vanadium solution contains iron and its pH is maintained at the range of pH 1 to 2.

6. A process according to any preceding claim characterised in that the electropotential of the vanadium is monitored during the oxidation and in response thereto the peroxomonosulphuric acid solution is introduced until a predetermined cut-off point is reached.

7. A process according to claim 6 characterised in that the predetermined cut-off point is selected at a measured potential of above 700 mV with reference to a Pt, Ag/AgCl set of electrodes.

8. A process according to any preceding claim in which the vanadium solution after oxidation at a temperature of 0—50°C has a pH of from pH 1 to 2 and is contacted with a tertiary amine containing extractant solution, thereby removing the vanadium from aqueous solution.

**Patentansprüche**

1. Verfahren zur Oxydation von Vanadium zur Oxydationsstufe V, wobei ein Oxydationsmittel in eine wässerige saure Lösung von Vanadium in einer niedrigeren als der Oxydationsstufe V bei einer Temperatur

von 0° bis 80°C eingeleitet und das Oxydationsmittel in Lösung gehalten wird bis zumindest etwas von Vanadium zur Oxydationsstufe V oxydiert worden ist, dadurch gekennzeichnet, daß als Oxydationsmittel eine wässerige saure Lösung von Peroxomonoschwefelsäure enthaltend Wasserstoffperoxid in einer Menge von weniger als ein Mol Wasserperoxid pro Mol Peroxomonoschwefelsäure verwendet wird.

2. Verfahren anch Anspruch 1, dadurch gekennzeichnet, daß die Peroxomonoschwefelsäure in wässeriger saurer Lösung enthaltend Wasserstoffporoxid in einer Menge von weniger als 1 Mol pro 6 Molen Peroxomonoschwefelsäure verwendet wird.

3. Verfahren nach Anspruch 1 oder 2, dadurch gekennzeichnet, daß die Lösung der Peroxomonoschwefelsäure durch Reaktion zwischen wässerigem Wasserstoffperoxid mit einer Konzentration im Bereich von 60 bis 75 Gew.% und Schwefelsäure mit einer Konzentration von mindestens 90 Gew.% in einem molaren Verhältnis von $H_2SO_4$:$H_2O_2$ im Bereich von 2,5:1 bis 4:1 erhalten wird.

4. Verfahren nach einem der Ansprüche 1 bis 3, dadurch gekennzeichnet, daß die Vanadiumlösung innerhalb des pH-Bereiches von 1 bis 3 gehalten wird.

5. Verfahren nach Anspruch 4, dadurch gekennzeichnet, daß die Vanadiumlösung Eisen enthält und ihr pH-Wert im Bereich von 1 bis 2 gehalten wird.

6. Verfahren nach einem der vorhergehenden Ansprüche, dadurch gekennzeichnet, daß während der Oxydation das elektrische Potential des Vanadiums überwacht wird und als Folge daraus die Peroxomonoschwefelsäurelösung eingeleitet wird bis ein vorbestimmter Abschaltpunkt erreicht ist.

7. Verfahren nach Anspruch 6, dadurch gekennzeichnet, daß der vorbestimmte Abschaltpunkt bei einer gemessenen Spannnung von über 700 mV mit Bezug auf einen Pt, Ag/AgCl-Satz von Elektroden ausgewählt wird.

8. Verfahren nach einem der vorhergehenden Ansprüche, dadurch gekennzeichnet, daß die Vanadiumlösung nach der Oxydation bei einer Temperatur von 0—50°C einen pH-Wert von 1 bis 2 hat und mit einer ein teriäres Amin enthaltenden Extraktionslösung zusammengebracht wird, wodurch das Vanadium aus der wässerigen Lösung entfernt wird.

**Revendications**

1. Procédé d'oxydation du vanadium à l'état d'oxydation V (V) dans lequel l'oxydant est introduit dans une solution acide aqueuse de vanadium se trouvant à un état d'oxydation inférieur à V (V), à une température comprise entre 0 et 80°C, et l'oxydant est maintenu en solution jusqu'à ce qu'au moins une partie du vanadium ait été oxydée à l'état d'oxydation V (V), caractérisé en ce qu'on emploie comme oxydant une solution acide aqueuse d'acide peroxomonosulfurique contenant du peroxyde d'hydrogène en une quantité inférieure à une mole de peroxyde d'hydrogène par mole d'acide peroxomonosulfurique.

2. Procédé suivant la revendication 1 caractérisé en ce qu'on emploie l'acide peroxomonosulfurique à l'état d'une solution acide aqueuse de celui-ci contenant du peroxyde d'hydrogène en une quantité inférieure à 1 mole pour 6 moles d'acide peroxomonosulfurique.

3. Procédé suivant l'une des revendications 1 ou 2 caractérisé en ce qu'on emploie une solution d'acide peroxomonosulfurique obtenue par réaction entre du peroxyde d'hydrogène aqueux ayant une concentration choisie dans la gamme de 60 à 75 % en poids et de l'acide sulfurique ayant une concentration d'au moins 90 % en poids, en un rapport molaire $H_2SO_4$:$H_2O_2$ choisi dans la gamme de 2,5:1 à 4:1.

4. Procédé suivant l'une quelconque des revendications 1 à 3 caractérisé en ce qu'on maintient la solution de vanadium dans la zone de pH comprise entre pH=1 et pH=3.

5. Procédé suivant la revendication 4 caractérisé en ce que la solution de vanadium contient du fer et en ce qu'on maintient son pH entre pH=1 et pH=2.

6. Procédé suivant l'une quelconque des revendications précédentes caractérisé en ce qu'on mesure le potentiel électrochimique du vanadium au cours de l'oxydation et en ce qu'on introduit la solution d'acide peroxomonosulfurique en réponse à cette mesure jusqu'à ce qu'on atteigne un point de coupure prédéterminé.

7. Procédé selon la revendication 6 caractérisé en ce que le point de coupure prédéterminé est choisi à un potentiel mesuré supérieur à 700 mV par rapport à un jeu d'électrodes Pt, Ag/AgCl.

8. Procédé suivant l'une quelconque des revendications précédentes caractérisé en ce que, après oxydation à une température de 0 à 50°C, la solution de vanadium a un pH compris entre pH=1 et pH=2 et en ce qu'on la met en contact avec une solution d'extraction contenant une amine tertiaire, afin de récupérer le vanadium de la solution aqueuse.

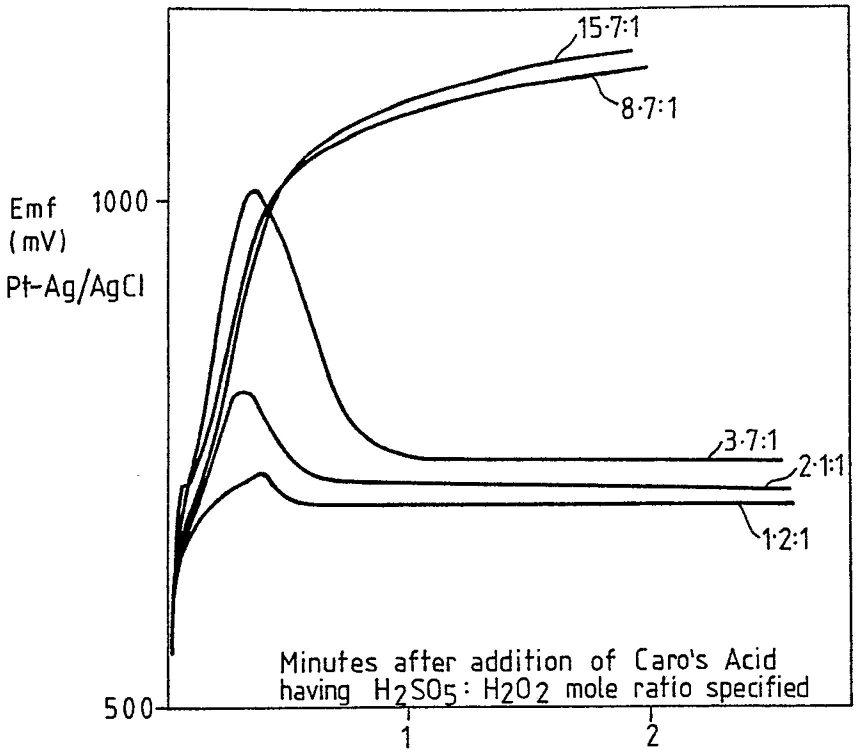
15·7:1
8·7:1
Emf
(mV)
Pt-Ag/AgCl
1000
500
3·7:1
2·1:1
1·2:1
Minutes after addition of Caro's Acid
having $H_2SO_5$ : $H_2O_2$ mole ratio specified
1
2

Fig.1.

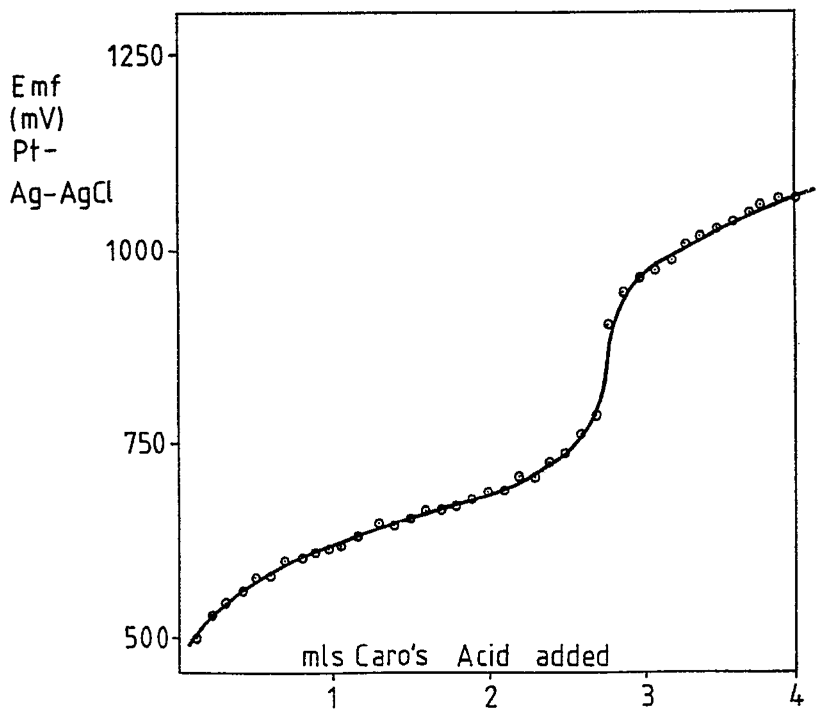
Emf
(mV)
Pt-
Ag-AgCl
1250
1000
750
500
mls Caro's Acid added
1
2
3
4

Fig.2.

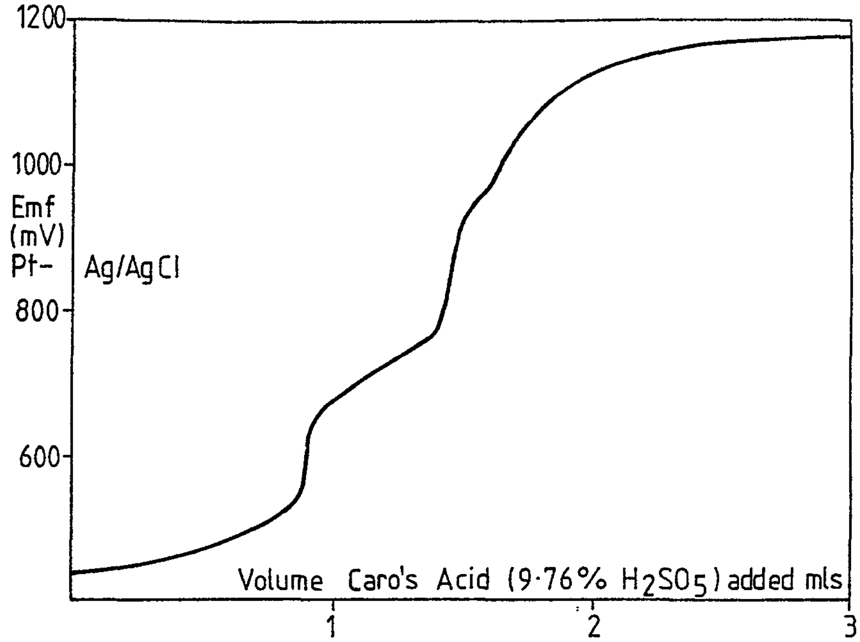
1200
1000
Emf
(mV)
Pt- Ag/AgCl
800
600
Volume Caro's Acid (9·76% $H_2SO_5$) added mls
1
2
3

Fig. 3.

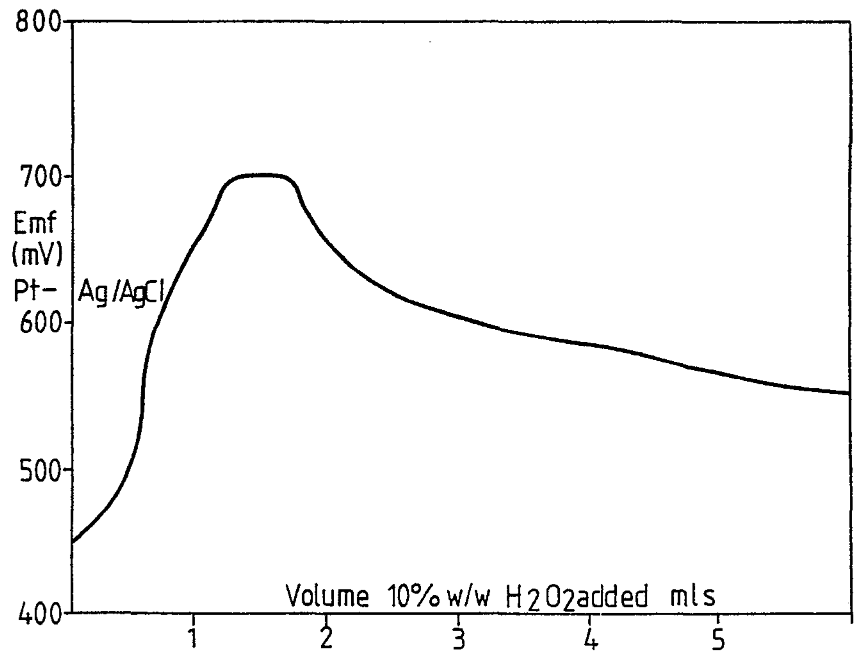
800
700
Emf
(mV)
Pt- Ag/AgCl
600
500
400
Volume 10% w/w $H_2O_2$ added mls
1
2
3
4
5

Fig. 4.